# EUROPÄISCHE PATENTSCHRIFT

(11) **EP 2 822 818 B1**
(45) Veröffentlichungstag und Bekanntmachung des Hinweises auf die Patenterteilung: **21.09.2016**
(21) Anmeldenummer: 13707603.0
(22) Anmeldetag: 25.02.2013
(51) Int. Cl.: B60R 21/36

(54) **FUßGÄNGERSCHUTZWORRICHTUNG FÜR EIN KRAFTFAHRZEUG**
PEDESTRIAN PROTECTION DEVICE FOR A MOTOR VEHICLE
SYSTEME DE PROTECTION DE PIETONS, POUR AUTOMOBILE

(30) Priorität: 05.03.2012 DE 102012203409
(43) Veröffentlichungstag der Anmeldung: 14.01.2015
(73) Patentinhaber: Bayerische Motoren Werke Aktiengesellschaft, 80809 München (DE)
(72) Erfinder: KOESTLER, Ulrich, 85241 Hebertshausen (DE); MEIERHOFER, Walter, 94099 Schmidham (DE); IVENZ, Udo, 86456 Gablingen (DE)
(86) Internationale Anmeldenummer: PCT/EP2013/053705
(87) Internationale Veröffentlichungsnummer: WO 2013/131771

(56) Entgegenhaltungen:
- EP-A2- 1 681 212
- WO-A1-02/079009
- WO-A1-03/059700
- WO-A1-2005/023605
- WO-A1-2011/102075
- US-A1- 2002 074 775

## Beschreibung

Die vorliegende Erfindung bezieht sich auf eine Fußgängerschutzvorrichtung für ein Kraftfahrzeug mit einem aufblasbaren Airbag, der sich im aufgeblasenen Zustand über eine Windschutzscheibe erstreckt, so dass ein Aufprall einer Person auf die Windschutzscheibe durch den Airbag abgemildert wird.

Es ist bekannt, zu einem Fußgängerschutz einen Airbag im Bereich einer Windschutzscheibe vorzusehen. Insbesondere wurde bisher vorgeschlagen, einen Airbag im Bereich eines Windlaufs bzw. eines hinteren Endes einer Frontklappe unterzubringen. Im Falle einer Kollision des Kraftfahrzeugs mit einem Fußgänger wird der Airbag ausgelöst, d.h. aufgeblasen, wobei sich der aufgeblasene Airbag dann zumindest teilweise über eine Windschutzscheibe erstreckt.

Die WO 02/079009 offenbart ein Kraftfahrzeug mit einer Fußgängereinrichtung nach dem Oberbegriff des Anspruchs 1.

Es ist nunmehr Aufgabe der vorliegenden Erfindung, eine Fußgängerschutzvorrichtung für ein Kraftfahrzeug mit einem aufblasbaren Airbag zu schaffen, die einen Aufprall einer Person besser abschwächen kann.

Diese Aufgabe wird durch eine Kraftfahrzeug mit einer Fußgängerschutzvorrichtung gelöst, die die Merkmale von Patentanspruch 1 aufweist. Weiterbildungen des Kraftfahrzeuges mit einer Fußgängerschutzvorrichtung gemäß der vorliegenden Erfindung sind in den abhängigen Patentansprüchen beschrieben.

Insbesondere hat eine Fußgängerschutzvorrichtung des Kraftfahrzeuges gemäß der vorliegenden Erfindung einen aufblasbaren Airbag, der ein Volumenteil und ein mit dem Volumenteil verbundenen Gaseinströmkanal aufweist. Das Volumenteil ist derart angepasst, dass es sich im aufgeblasenen Zustand über eine Windschutzscheibe bzw. Frontscheibe des Kraftfahrzeugs erstreckt. Ferner weist die Fußgängerschutzvorrichtung gemäß der vorliegenden Erfindung Mittel auf, die derart ausgebildet sind, dass das aufgeblasene Volumenteil bei einem Aufprall einer Person auf das aufgeblasene Volumenteil in eine Aufprallrichtung verschiebbar ist.

Der Gaseinströmkanal ist bevorzugt ein Kanal, der zwischen einem Gasgenerator und dem Volumenteil angeordnet ist. Das Volumenteil wiederum ist der Teil des Airbags, der im aufgeblasenen Zustand ein hinreichendes Schutzkissen für die Person bei einem Aufprall auf die Windschutzscheibe bildet.

Bei einem Eintauchen einer Person bzw. eines Fußgängers, insbesondere eines Kopfes der Person, in das Volumenteil bildet das Volumenteil in gewisser Weise eine formschlüssige Verbindung mit dem Kopf aus, so dass sich der Kopf oder ein anderes Körperteil der Person verhältnismäßig schwierig relativ zu dem Volumenteil bewegen kann. Daher haben die Erfinder gemäß der vorliegenden Erfindung vorgeschlagen, dass das Volumenteil selbst in Bezug auf die Windschutzscheibe in Aufprallrichtung verschiebbar ist. Mit anderen Worten sorgen die Merkmale der vorliegenden Erfindung dafür, dass, wenn es schon schwierig ist, dass die Person auf dem Volumenteil, d.h. relativ zu dem Volumenteil gleiten kann, die Person zusammen mit dem Volumenteil in eine Aufprallrichtung gleiten kann.

Das Volumenteil kann derart ausgebildet sein, dass es sich über eine gesamte Breite der Windschutzscheibe, d.h. in y-Richtung des Kraftfahrzeugkoordinatensystems, und über eine linke und rechte A-Säule einer Karosserie des Kraftfahrzeugs erstreckt. Insbesondere kann das Volumenteil derart U-förmig ausgebildet sein, dass ein Abdeckbereich an den A-Säulen und an den äußeren Rändern der Windschutzscheibe länger ist, d.h. in x- und z-Richtung des Kraftfahrzeugkoordinatensystems länger ist, als an einem mittleren Bereich der Windschutzscheibe. Die x-Richtung verläuft entlang der Längsachse des Kraftfahrzeugs, die y-Richtung verläuft entlang der Querachse des Kraftfahrzeugs und die z-Richtung verläuft entlang der Hochachse des Kraftfahrzeugs.

Das derartige U-förmige Volumenteil hat den Vorteil, dass es die A-Säulen, die über ihre gesamte Länge einen zu harten Widerstand für die aufprallende Person bilden würden, abdeckt. Mit anderen Worten ist ein HIC-Wert über die gesamte Länge der A-Säulen zu hoch, so dass die A-Säulen über einen großen Bereich in xz-Richtung durch das Volumenteil abgedeckt sind. Die Windschutzscheibe hingegen hat möglicherweise an unterschiedlichen Orten voneinander sehr unterschiedliche HIC-Werte. Ein HIC-Wert der Windschutzscheibe kann an deren mittleren Bereich durch einen Bruch der Scheibe durch die aufprallende Person ausreichend sein, so dass nur ein unterer Bereich der Windschutzscheibe und möglicherweise äußere Randbereiche der Windschutzscheibe zum Fußgängerschutz von dem Volumenteil abgedeckt werden müssen. Dies hat den Vorteil, dass, da die Windschutzscheibe nicht vollständig abgedeckt ist, ein Sichtfeld eines Fahrers des Kraftfahrzeugs weniger eingeschränkt ist und dem Fahrer des Kraftfahrzeugs ein größeres Sichtfeld zur Verfügung steht. Die Abkürzung HIC steht für Head Injury Criterion und kann auch als Kopfbelastungswert bezeichnet werden.

Bevorzugt sind die vorstehend beschriebenen Mittel der Fußgängerschutzvorrichtung zumindest durch den Gaseinströmkanal ausgebildet. Der Gaseinströmkanal ist demnach derart beschaffen, dass das Volumenteil gegenüber der Scheibe verschiebbar ist.

Insbesondere kann bei der Fußgängerschutzvorrichtung gemäß der vorliegenden Erfindung der Gaseinströmkanal eine derartige Geometrie haben, dass eine Verschiebung des Volumenteils bei dem Aufprall der Person ermöglicht ist.

Mit anderen Worten lässt also der Gaseinströmkanal als eine Verbindung zwischen dem Gasgenerator und dem Volumenteil zu, dass das Volumenteil sich in Aufprallrichtung entlang der Windschutzscheibe bewegen kann.

Gemäß einer Weiterbildung der Fußgängerschutzvorrichtung gemäß der vorliegenden Erfindung ist dabei der Gaseinströmkanal geometrisch derart ausgebildet, dass er U-förmig in zwei Gaseinströmkanäle verzweigt ist. Insbesondere geht ein Beginn des Gaseiriströmkanals in einen U-förmigen Gaseinströmkanal über, dessen beiden Enden (die Schenkel des U) dann mit dem Volumenteil sowohl mechanisch als auch strömungsmechanisch verbunden sind.

Diese U-förmige Geometrie des Gaseinströmkanals ermöglicht eine Verschiebung des Volumenteils dadurch, dass der Gaseinströmkanal von der U-förmigen Geometrie in eine V-förmige Geometrie durch die in Aufprallrichtung wirkende Kraft der Person verändert wird.

Alternativ oder zusätzlich kann bei der Fußgängerschutzvorrichtung der vorliegenden Erfindung der Gaseinströmkanal auch elastisch oder anderweitig verlängerbar, z.B. über Reißnähte, ausgebildet sein.

Damit ist ebenso eine Bewegung oder Verschiebung des Volumenteils in Aufprallrichtung ermöglicht.

Zusätzlich oder alternativ können bei der Fußgängerschutzvorrichtung gemäß der vorliegenden Erfindung die Mittel durch zumindest ein verlängerbares und/oder trennbares Fangband gebildet sein, das derart ausgebildet ist, dass das Fangband beim Aufblasen des Volumenteils das Volumenteil an einer ersten Position hält und unter Belastung durch eine aufprallende Person verlängerbar und/oder trennbar ist, so dass das Volumenteil zu zumindest einer zweiten Position verschiebbar ist.

Hierdurch bleibt der Airbag beim Aufblasen zunächst an einer ersten Position. Wenn jedoch eine Person auf das Volumenteil prallt, wird das Fangband verlängert oder getrennt, so dass eine Verschiebung des Volumenteils zugelassen ist. Damit ist eine Belastung der Person beim Aufprallen auf das Volumenteil verringert, da das Volumenteil mit der Person über eine bestimmte Strecke bewegbar ist.

Es können beispielsweise zwei Fangbänder vorgesehen sein, von denen das eine an einem linken äußeren Bereich des Volumenteils befestigt ist und das andere an einem rechten äußeren Bereich des Volumenteils befestigt ist.

Insbesondere kann bei der Fußgängerschutzvorrichtung gemäß der vorliegenden Erfindung das Fangband eine Reißnaht aufweisen, die derart ausgebildet ist, dass die Reißnaht unter Belastung durch die aufprallende Person reißbar ist, so dass das Fangband verlängerbar ist. Die Reißnaht ist also unter Last auftrennbar bzw. reißbar.

Die Reißnaht kann z.B. derart ausgebildet sein, dass sie das Fangband in seiner eigentlichen Länge verkürzt. Z.B. kann das Fangband in Form einer Z-Faltung vernäht sein. Wenn die Naht durch die Last der Person reißt, klappt die Z-Faltung auf, verlängert somit das Fangband und ermöglicht damit eine Bewegung oder Verschiebung des Volumenteils.

Es kann auch eine andere Art der Faltung/Verkürzung des Fangbands verwendet sein. Zum Beispiel kann die Faltung/Verkürzung das Fangbands durch eine Schlaufe ausgebildet sein, die bei einer Auftrennung der Reißnaht eine Verlängerung des Fangbands ermöglicht.

Alternativ zu einer Reißnaht kann das Fangband eine unter Last lösbare Verklebung aufweisen. Die Verklebung kann ebenso im Kombination mit einer Z-Faltung des Fangbands oder eine andere Art von Faltung/Verkürzung des Fangbands ausgebildet sein.

Ebenso kann eine Reißnaht und eine lösbare Verklebung miteinander kombiniert sein.

In dem Fall, in dem bei der Fußgängerschutzvorrichtung gemäß der vorliegenden Erfindung die Mittel ein trennbares Fangband sind, kann zum Beispiel eine Verbindung des Fangbands mit dem Volumenteil oder eine karosserieseitige Verbindung des Fangbands trennbar sein, also eine Solltrennstelle aufweisen, so dass das Fangband eine Verschiebung des Volumenteils nicht mehr einschränken kann. Alternativ oder zusätzlich kann das trennbare Fangband auch eine Solltrennstelle innerhalb des Fangands aufweisen, an der das Fangband unter Last gewollt in zwei Hälften trennbar bzw. reißbar ist.

Gemäß einer Weiterbildung der Fußgängerschutzvorrichtung der vorliegenden Erfindung sind die Mittel zumindest durch reibungsmindernde Mittel ausgebildet, die an einer der Windschutzscheibe zugewandten Seite des Volumenteils vorgesehen sind, so dass eine Verschiebbarkeit des Volumenteils auf der Windschutzscheibe begünstigt ist.

Mit reibungsmindemden Mittel ist zumindest ein Mittel gemeint, das einen Reibwert zwischen dem Volumenteil und der Windschutzscheibe vermindert. Hierdurch kann das Volumenteil leichter auf der Windschutzscheibe gleiten, so dass es leichter verschiebbar ist und somit eine Belastung auf die auftreffende Person vermindert ist.

Die reibungsmindemden Mittel können z.B. durch eine gleitfähige Beschichtung des Volumenteils und/oder durch zumindest ein zusätzlich an dem Volumenteil angebrachtes Gleitelement ausgebildet sein.

Bevorzugt sind bei der Fußgängerschutzvorrichtung gemäß der vorliegenden Erfindung das Volumenteil und der Gaseinströmkanal aus einem Gewebe ausgebildet.

Nachstehend erfolgt eine Kurzbeschreibung der Figuren.
- Fig. 1: zeigt schematisch eine Fußgängerschutzvorrichtung gemäß einem Ausführungsbeispiel der vorliegenden Erfindung in einer Seitenansicht, wobei ein Airbag ausgelöst ist.
- Fig. 2: zeigt schematisch die Fußgängerschutzvorrichtung gemäß dem Ausführungsbeispiel der vorliegenden Erfindung in einer Seitenansicht während ein Fußgänger auf den Airbag trifft.
- Fig. 3a: zeigt schematisch die Fußgängerschutzvorrichtung gemäß dem Ausführungsbeispiel der vorliegenden Erfindung in einer Draufsicht entsprechend dem in Fig. 1 gezeigten Zustand.
- Fig. 3b: zeigt schematisch die Fußgängerschutzvorrichtung gemäß dem Ausführungsbeispiel der vorliegenden Erfindung in einer Schnittseitenansicht entsprechend dem in Fig. 1 gezeigten Zustand.
- Fig. 4a: zeigt schematisch die Fußgängerschutzvorrichtung gemäß dem Ausführungsbeispiel der vorliegenden Erfindung in einer Draufsicht entsprechend dem in Fig. 2 gezeigten Zustand.
- Fig. 4b: zeigt schematisch die Fußgängerschutzvorrichtung gemäß dem Ausführungsbeispiel der vorliegenden Erfindung in einer Schnittseitenansicht entsprechend dem in Fig. 2 gezeigten Zustand.

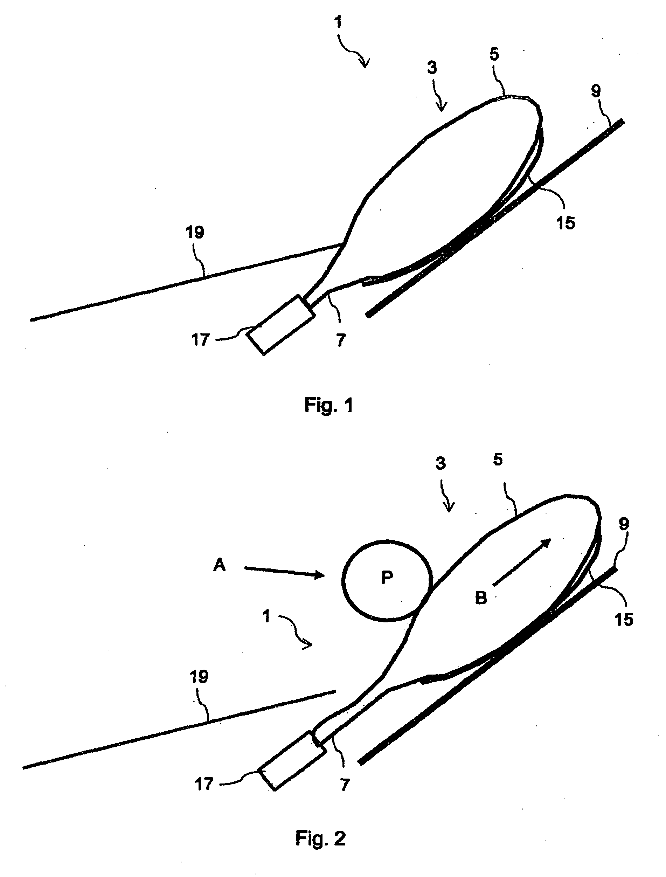

Fig. 1 zeigt eine Fußgängerschutzvorrichtung 1 für ein Kraftfahrzeug mit einem aufblasbaren Airbag 3 schematisch in einer Seitenansicht. Insbesondere ist der Airbag 3 in einem aufgeblasenen Zustand gezeigt. Der Airbag 3 weist ein Volumenteil 5 und einen Gaseinströmkanal 7 auf. Das Volumenteil 5 und der Gaseinströmkanal 7 sind miteinander verbunden und gehen ineinander über. Der Gaseinströmkanal 7 ist ferner mit einem Gasgenerator 17 verbunden. Über den Gaseinströmkanal 7 ist das Volumenteil 5 mit Gas aus dem Gasgenerator 17 befüllbar. In dem gezeigten aufgeblasenen Zustand des Airbags 3 erstreckt sich das Volumenteil 5 über eine Windschutzscheibe 9 und nicht dargestellte A-Säulen des Kraftfahrzeugs. Insbesondere erstreckt sich das Volumenteil 5 über zumindest einen unteren Bereich der Windschutzscheibe 9 im Wesentlichen über eine gesamte Breite der Windschutzscheibe 9. Ferner hat das Volumenteils 5 auf seiner der Windschutzscheibe 9 zugewandten Seite eine Gleitschicht 15. Die Gleitschicht 15 erleichtert eine Verschiebung des Volumenteils 5 auf der Windschutzscheibe 9 und stellt damit ein erfindungsgemäßes Mittel dar.

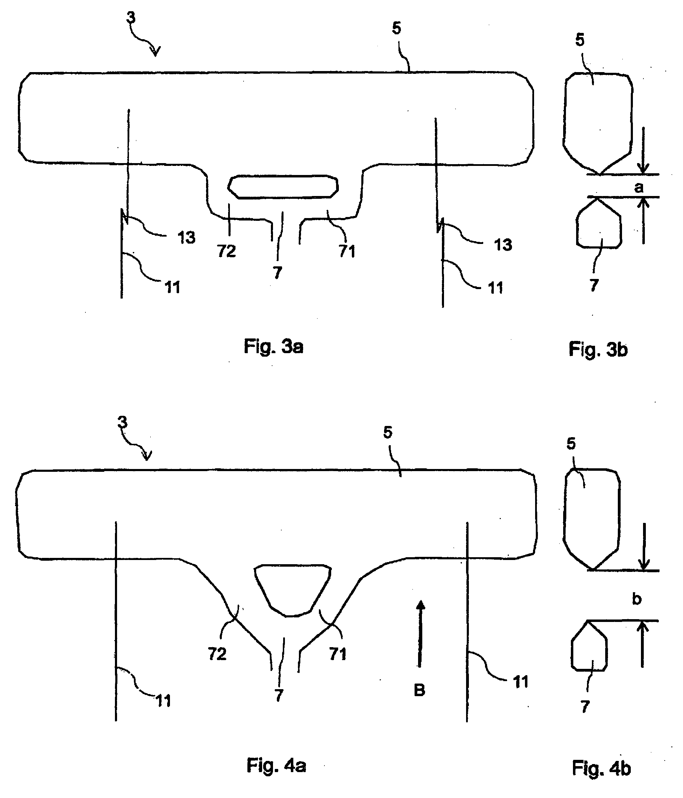

Insbesondere ist in Fig. 3a schematisch in einer Draufsicht das Volumenteil 5 gezeigt, an dem der Gaseinströmkanal 7 angeschlossen ist. Der Gaseinströmkanal 7 ist U-förmig verzweigt und weist zwei Schenkel 71 und 72 auf. Die beiden Schenkel 71 und 72 sind an ihren jeweiligen Enden mit dem Volumenteil 5 verbunden. Ferner sind in Fig. 3 zwei Fangbänder 11 gezeigt, die sich links und rechts des Gaseinströmkanals 7 erstrecken und zum Einen karosserie- bzw. fahrzeugseitig befestigt sind und zum Anderen an dem Volumenteil 5 befestigt sind. Die Fangbänder 11 weisen jeweils eine Z-förmige Reißnaht 13 auf. Damit sind die Fangbänder 11 an einer Stelle durch eine Z-förmige Faltung verkürzt, wobei die Z-förmige Faltung mit einer Naht fixiert ist. Die Fangbänder 11 können auch mehrere derartige Reißnähte aufweisen undkönnen in einer anderen Weise, die Fangbänder verkürzend gefaltet sein. Alternativ können die Fangbänder 11 auch durch eine Verklebung verkürzt und damit in einem Betrieb verlängerbar sein. Ebenso können die Fangbänder 11 eine Solltrennstelle aufweisen, die ein Trennen der Fangbänder 11 in jeweils zwei Teile ermöglicht.

Das Volumenteil 5 kann entgegen der Darstellung in Fig. 3a auch eine andere Form aufweisen. Zum Beispiel kann das Volumenteil an seinem linken und rechten Ende verlängerte Abschnitte aufweisen, die sie über A-Säule und/oder den äußeren Rand der Windschutzscheibe 9 erstrecken.

Femer ist in Fig. 3b schematisch eine Ansicht eines Schnittes durch eine Mitteentlang einer xz-Ebene des Fahrzeugkoordinatensystems (x ist die Längsachse des Kraftfahrzeuges und z ist die Hochachse des Kraftfahrzeugs) - des Gaseinströmkanals 7 und des Volumenteils 5 gezeigt.

Die Fangbänder 11 stellen ebenso wie die Gleitschicht 15 ein erfindungsgemäßes Mittel der Fußgängerschutzvorrichtung 1 dar, das es ermöglicht, dass das aufgeblasene Volumenteil 5 bei einem Aufprall einer Person auf das aufgeblasene Volumenteil 5 in eine Aufprallrichtung verschiebbar ist.

Dies soll nun insbesondere anhand Figuren 2, 4a und 4b erläutert werden.

Fig. 2 zeigt schematisch eine Seitenansicht des aufgeblasenen Airbags 3, der sich in einem verschobenen Zustand befindet. Ein Kopf einer Person P ist kreisförmig dargestellt und ist insbesondere in dem Zustand gezeigt, in dem der Kopf P auf das Volumenteil 5 des Airbags 3 aufgetroffen ist, wobei der Kopf P aus der Richtung des Pfeils A - der Aufprallrichtung - gekommen ist. Das Volumenteil 5 ist durch den Aufprall des Kopfes P entlang der Windschutzscheibe 9 in Richtung des Pfeils B verschoben. Die Verschiebung des Volumenteil 5 in Richtung des Pfeils B stellt zumindest teilweise eine Verschiebung in die Aufprallrichtung A dar. Mit anderen Worten weist die Verschieberichtung B als eine Richtungskomponente auch die Aufprallrichtung A auf.

Die Wucht des Aufpralls der Person P, die über die Frontklappe 19 auf das Volumenteil 5 auftrifft, verursacht eine Kraft, die resultierend auf das Volumenteil 5 in Richtung des Pfeils B also in Richtung des oberen Endes der Windschutzscheibe 9 wirkt.

Dies hat, wie in Fig. 4a zu sehen ist, zur Folge, dass die Reißnähte 13 der Fangbänder 11 aufgerissen sind, und die Z-Faltung der Fangbänder 11 entfaltet wurde, so dass insgesamt eine Längung der Fangbänder 11 stattgefunden hat. Damit konnte sich das Volumenteil 5 entlang der Windschutzscheibe 9 bewegen bzw. konnte entlang der Windschutzscheibe 9 verschoben werden.

Diese Verschiebung wird zudem gemäß dem vorliegenden Ausführungsbeispiel dadurch begünstigt, dass der Gaseinströmkanal 7 U-förmig ausgebildet ist und durch die wirkende Kraft der Person P derart gestreckt wird, dass der Gaseinströmkanal 7 in diesem gestreckten Zustand eine V-förmige Ausgestaltung aufweist, wie insbesondere auch aus Fig. 3a hervorgeht. Damit bildet auch der U-förmige Gaseinströmkanal 7 ein Mittel gemäß der vorliegenden Erfindung, das eine Verschiebung des aufgeblasenen Volumenteils 5 bei dem Aufprall der PersonP auf das aufgeblasene Volumenteil 5 in die Aufprallrichtung verschiebbar macht.

Zusätzlich wird Verschiebung durch die reibungsmindernde Gleitschicht 15 begünstigt.

Ferner ist analog zu Fig. 3b in Fig. 4b schematisch eine Ansicht eines Schnittes durch eine Mitte des Gaseinströmkanals 7 und des Volumenteils 5 in dem Zustand von Fig. 4a gezeigt.

Wie im Vergleich zu dem Zustand von Fig. 3b zu sehen ist, ist der Abstand b zwischen dem Beginn des Gaseinströmkanals 7 und dem Volumenteil 5 nach dem Auftreffen der Person P im Vergleich zu dem Abstand a zwischen dem Beginn des Gaseinströmkanals 7 und dem Volumenteil 5 vor dem Auftreffen der Person P größer. Das Volumenteil 5 ist durch das Auftreffen der Person P, das Reißen der Z-Nähte 13, die Streckung des Gaseinströmkanals 7 und das Gleiten des Volumenteils 5 auf der Windschutzscheibe 9 verschoben.

Alle drei gemäß dem Ausführungsbeispiel beschriebenen Mittel gemäß der vorliegenden Erfindung (die Fangbänder 11 mit Reißnaht 13, die Geometrie des Gaseinströmkanals 7 und die Gleitschicht 15) können auch unabhängig voneinander ausgebildet sein.

## Patentansprüche

1. Kraftfahrzeug mit einer Fußgängerschutzvorrichtung (1) mit einem aufblasbaren Airbag (3), der ein Volumenteil (5) und einen mit dem Volumenteil (5) verbundenen Gaseinströmkanal (7) aufweist,
**dadurch gekennzeichnet, dass**
das Volumenteil (5) derart angepasst ist, dass es sich im aufgeblasenen Zustand über zumindest einen unteren Bereich einer Windschutzscheibe (9) des Kraftfahrzeugs im Wesentlichen über eine gesamte Breite der Windschutzscheibe (9) erstreckt, und wobei die Fußgängerschutzvorrichtung (1) Mittel aufweist, die derart ausgebildet sind, dass das aufgeblasene Volumenteil (5) bei einem Aufprall einer Person (P) auf das aufgeblasene Volumenteil (5) in eine Aufprallrichtung (A) verschiebbar ist.

2. Kraftfahrzeug nach Patentanspruch 1, wobei die Mittel zumindest durch den Gaseinströmkanal (7) gebildet sind.

3. Kraftfahrzeug nach Patentanspruch 2, wobei der Gaseinströmkanal (7) eine derartige Geometrie hat, die eine Verschiebung des Volumenteils (5) bei dem Aufprall der Person (P) ermöglicht.

4. Kraftfahrzeug nach Patentanspruch 3, wobei der Gaseinströmkanal (7) U-förmig in zwei Gaseinströmkanäle (71, 72) verzweigt ist.

5. Kraftfahrzeug nach einem der Patentansprüche 2 bis 4, wobei der Gaseinströmkanal (7) elastisch ausgebildet ist.

6. Kraftfahrzeug nach einem der Patentansprüche 1 bis 5, wobei die Mittel durch zumindest ein verlängerbares und/oder trennbares Fangband (11) gebildet sind, das derart ausgebildet ist, dass das Fangband (11) beim Aufblasen des Volumenteils (5) das Volumenteil (5) an einer ersten Position hält und unter Belastung durch eine aufprallende Person (P) verlängerbar und/oder trennbar ist, so dass das Volumenteil (5) zu zumindest einer zweiten Position verschiebbar ist.

7. Kraftfahrzeug nach Patentanspruch 6, wobei das Fangband (11) eine Reißnaht (13) und/oder eine lösbare Verklebung aufweist, diederart ausgebildet ist/sind, dass die Reißnaht (13) und/oder die lösbare Verklebung unter Belastung durch eine aufprällende Person (P) reißbar und/oder lösbar ist/sind, so dass das Fangband (11) verlängerbar ist.

8. Kraftfahrzeug nach einem der Patentansprüche 1 bis 7, wobei die Mittel zumindest durch reibungsmindernde Mittel (15) ausgebildet sind, die an einer der Windschutzscheibe (9) zugewandte Seite des Volumenteils (5) vorgesehen sind, so dass eine Verschiebbarkeit des Volumenteils (5) auf der Windschutzscheibe (9) begünstigt ist.

9. Kraftfahrzeug nach Patentanspruch 8, wobei die reibungsmindernden Mittel zumindest durch eine gleitfähige Beschichtung (15) des Volumenteils (5) und/oder durch ein zusätzlich an dem Volumenteil (5) angebrachtes Gleitelement ausgebildet sind.

## Claims

1. A motor vehicle with a pedestrian protection device (1) comprising an inflatable airbag (3) which has a volume part (5) and a gas inlet channel (7) which is connected to the volume part (5),
**characterised in that**
the volume part (5) is adapted such that, when inflated, it substantially extends over the entire width of a windscreen (9), over at least a lower region of the windscreen (9) of the motor vehicle, and wherein the pedestrian protection device (1) has means which are configured such that, in the event of a person (P) colliding with the inflated volume part (5), said inflated volume part (5) is displaceable in an impact direction (A).

2. A motor vehicle according to claim 1, wherein the means are formed at least by the gas inlet channel (7).

3. A motor vehicle according to claim 2, wherein the gas inlet channel (7) is of a shape such that it allows a displacement of the volume part (5) during impact by the person (P).

4. A motor vehicle according to claim 3, wherein the gas inlet channel (7) branches in a U shape into two gas inlet channels (71, 72).

5. A motor vehicle according to any one of claims 2 to 4, wherein the gas inlet channel (7) is formed resiliently.

6. A motor vehicle according to any one of claims 1 to 5, wherein the means are formed by at least one extendable and/or separable tether strap (11) which is configured such that, during inflation of the volume part (5), the tether strap (11) holds the volume part (5) in a first position and is extendable and/or separable under stress caused by an impacting person (P), so that the volume part (5) is displaceable to at least a second position.

7. A motor vehicle according to claim 6, wherein the tether strap (11) has a tear seam (13) and/or a releasable adhesive bond which is/are configured such that the tear seam (13) and/or the releasable adhesive bond is/are tearable and/or releasable under stress caused by an impacting person (P) so that the tether strap (11) is extendable.

8. A motor vehicle according to any one of claims 1 to 7, wherein the means are formed at least by friction-reducing means (15) which are provided on one side of the volume part (5) facing the windscreen (9), thereby promoting a displaceability of the volume part (5) on the windscreen (9).

9. A motor vehicle according to claim 8, wherein the friction-reducing means are formed at least by a slidable coating (15) of the volume part (5) and/or by a sliding element also attached to the volume part (5).

## Revendications

1. Véhicule équipé d'un dispositif de protection des piétons (1) comprenant un airbag gonflable (3) qui comprend une partie en volume (5) et un canal d'entrée de gaz (7) relié à la partie en volume (5),
**caractérisé en ce que**
la partie en volume (5) est adaptée de façon à s'étendre à l'état gonflé sur au moins la zone inférieure du pare-brise (9) du véhicule, essentiellement sur la totalité de la largeur de ce pare-brise (9), et le dispositif de protection des piétons (1) comprend des moyens qui sont réalisés de sorte qu'en cas d'impact d'une personne (P) sur la partie en volume gonflée (5), cette partie en volume gonflé (5) puisse être déplacée dans la direction de l'impact (A).

2. Véhicule conforme à la revendication 1,
dans lequel les moyens sont fermés au moins par le canal d'entrée de gaz (7).

3. Véhicule conforme à la revendication 2,
dans lequel le canal d'entrée de gaz (7) a une géométrie telle qu'il permette un déplacement de la partie en volume (5) en cas d'impact d'une personne (P).

4. Véhicule conforme à la revendication 3,
dans lequel le canal d'entrée de gaz (7) est en forme de U et subdivisé en deux canaux d'entrée de gaz (71, 72).

5. Véhicule conforme à l'une des revendications 2 à 4,
dans lequel le canal d'entrée de gaz (7) est élastique.

6. Véhicule conforme à l'une des revendications 1 à 5,
dans lequel les moyens sont formés par au moins une bande de retenue pouvant être allongée et/ou séparée (11) qui est réalisée de sorte que lors du gonflage de la partie de volume (5) cette bande de retenue (11) maintienne la partie de volume (5) dans une première position et, en cas de charge par impact d'une personne (P) puisse être allongée et/ou séparée de sorte que la partie en volume (5) puisse être déplacée vers au moins une seconde position.

7. Véhicule conforme à la revendication 6,
dans lequel la bande de retenue (11) comporte une ligne d'arrachement (13) et/ou un collage amovible qui est(sont) réalisé(s) de sorte que la ligne d'arrachement (13) et/ou le collage amovible puisse(nt) être en cas de charge par impact d'une personne (P) rompue et/ou extrait de sorte que la bande de retenue (11) puisse être allongée.

8. Véhicule conforme à l'une des revendications 1 à 7,
dans lequel les moyens sont formés par au moins des moyens diminuant la friction (15) qui sont prévus du côté de la partie en volume (5) tournée vers le pare-brise (9), de façon à favoriser la possibilité de déplacement de la partie en volume (5) sur le pare-brise (9).

9. Véhicule conforme à la revendication 8,
dans lequel les moyens diminuant la friction sont formés par un revêtement glissant (15) de la partie en volume (5) et/ou par un élément glissant monté en plus sur la partie de volume (5).
